# EUROPEAN PATENT APPLICATION

(11) **EP 0 638 488 A1**
(43) Date of publication of application: **15.02.1995**
(21) Application number: 94305951.9
(22) Date of filing: 11.08.1994
(51) Int. Cl.: B65D 81/34, A21D 13/08

(54) **Microwavable food product containing a moisture resistant edible internal barrier**

(30) Priority: 12.08.1993 GB 9316758
(71) Applicant: CONVENIENCE FOODS LIMITED, Nottingham NG7 2NS (GB)
(72) Inventor: Rees, Harold, Derby (GB)
(74) Representative: Harrison, Michael Robert

(57) **Abstract**

A microwavable food product including components of different water content in which an edible barrier to the passage of water is provided between the components. In a preferred product a component with a relatively low water content has had its water content reduced below 2% prior to assembly of the product.

## Description

### Field of the Invention

The present invention relates to microwavable food products having two components of different water contents and water activities. The invention also relates to a methods for making the food product.

### Background to the Invention

Some food products have constituent components of different water contents. Examples of such products include pies, quiches, pizzas, crumbles and the like, which have a sauce or filling of a relatively high water content and a pastry or other cereal component having a relatively low water content.

It is known to be a problem in such multi-component food products that moisture migrates from the wetter to the drier component during storage. The drier component can also take up water from the environment. Even when the products are stored in the frozen state, a certain amount of water migration can still occur between the different components.

The driving force for water transfer in food products is primarily the water partial pressure gradient existing between the product and the environment, or between the different components of the product. This partial pressure can be expressed as water activity (a_{w}), which is the partial pressure of water exerted by the food divided by the partial pressure of pure water at the same temperature. However, even in the absence of a water partial pressure gradient, water can migrate via liquid diffusion driven by such forces as water concentration gradients or capillary forces.

Generally, though, the rate of water transfer between two components of a food product increases with an increase in the a_{w} gradient, ie as the difference between water partial pressures of the food components increases. The rate of transfer also increases with closer contact between the components, and with increasing temperature [1,2,3].

An increase in the water content of the drier component, such as a foodstuff containing ground and baked cereals, leads to significant and deleterious changes in the "organoleptic" properties of that component (ie, its taste, texture and general acceptability to the consumer). For instance, an increase in the water content of pastry, or a similar combination of ground cereal and fat, adversely affects its texture.

During reheating of a multi-component food product in a conventional radiant heat or convection oven, water gained by the "drier" component can be driven off and some or all of the desired texture can be restored. However, if the product is reheated using microwave energy, the much shorter cooking times necessary to heat up the "wetter" component are insufficient to drive off gained water in the "drier" component. Pastry and similar products which have gained water during storage are rendered soft or "leathery" in texture when reheated in a domestic microwave oven. If an attempt is made to reduce the water content of the pastry by continued application of microwave energy, charring or scorching can then occur.

The problem of water migration is also compounded during the heating process itself, since moisture then migrates at an even faster rate from the wetter to the drier food component. This occurs even if the drier component has not gained water during storage, and again when the food product is microwave heated for only a short period of time, the resultant water migration from the wetter to the drier component can cause the latter to become unacceptably soggy.

Previous attempts to produce microwavable food products having two components of different water contents and water activities have not proved particularly successful. One approach has been to include a pie crust or other topping which is separately packaged from the wetter parts of the product and has to be heated separately in a conventional oven. This solution to the problem is clearly inconvenient for the user and wasteful in packaging.

An alternative known approach is to include with the product a so-called microwave susceptor, which directs microwave energy specifically towards the low water content component. But even with the use of such a device, it is not possible sufficiently to dry the component once its moisture content has exceeded a certain level which is quite likely to occur during storage.

Accordingly there is a need for an improved food product of this general type, in which the organoleptic properties of the lower moisture content component are not significantly impaired during storage and on subsequent microwave heating by water transfer from another compoent of the food product or from the environment. It is this need which the present invention addresses.

There have been proposals in the past for the use of edible barriers to separate two or more components of a food product in order to prevent transfer of materials, including water, between the components. Such barriers have only been proposed in a limited number of applications and, in considering microwavable products, they would not previously have been considered suitable to prevent water transfer between relatively high water content components such as pie fillings or sauces and relatively low water content components such as pie crusts or crumble toppings. It has now been surprisingly discovered that an edible barrier can be used in a microwavable food product of the type with which this invention is concerned if the barrier can be applied to a suitable substrate so as to form a substantially continuous film between the components of the food product. The provision of a substantially continuous film barrier overcomes the difficulties which would otherwise arise in sealing, against water transfer, the surface of the wetter component, such as the pie filling or sauce, against the surface of the drier component which may be a topping.

If consideration of the use of edible barriers had been given previously in connection with microwavable products of the type with which this invention is concerned, it is highly probable that their use would have been dismissed. Difficulties would have been foreseen in that the wetter component cannot easily be coated with a conventional barrier coating or film, partly because of its uneven surface and partly because direct contact between the barrier and the wetter component causes the former to dissolve prematurely. The uneven food surface can also cause puncture in the case of a barrier film. It would have been expected that the surface of the drier component could not easily be covered with a barrier film, again because of its uneven surface. In the case of crumble toppings, it would have been expected that barrier coatings would not provide a sufficiently continuous seal againts water migration. Where the topping is in direct contact with the sauce or filling, again the problem would have been foreseen that the barrier film or coating would dissolve into the wetter food components.

### Statements of the Invention

According to a first aspect of the present invention there is provided a food product comprising a first food component having a relatively high water activity and a relatively high water content; a second food component having a relatively low water activity and a relatively low water content; said food product being intended to be made ready for consumption by microwave heating for a time sufficient to raise the temperature of the first food component to at least 72°C; and, located between the two components, an edible barrier to the passage of water from the first component to the second component, the barrier being in the form of a substrate supported film which, at least between the components, is substantially continuous.

The requirement that the food product is intended to be made ready for consumption by microwave heating is further qualified by the time of microwave heating being sufficient to raise the temperature of the first food component to at least 72°C. This requirement would normally imply, for relevant food products which are typically of the chilled type, a microwave heating time of around 2-3 minutes which will be sufficient to raise the temperature of the filling, or other first food component, to the acceptable temperature of at least 72°C.

The invention thus provides a multi-component food product (at least two components) which is suitable for microwave heating straight off the shelf even after a period of storage.

It is preferred that the moisture content of the first component (in the preparation of the food product prior to packaging for sale) has been reduced below 2% (by weight). It has been found that the best products are obtained by reducing the water content below 2%. This allows some margin of take up of water during storage of the product. It has been discovered that if the water level were to rise significantly, say above 7%, then the subsequent microwave heating would not be such that the component would retain its organoleptic properties.

The edible barrier may be located on a substrate in the form of a sheet positioned between the two food components. Preferably the sheet is a self-supporting sheet of sufficient rigidity that when supported at its edges it will retain its shape. In the case where the food product includes a lower food component or high water content and an upper food component or low water content then the self-supporting sheet may be located between the two components and it will retain its position above and out of contact with the lower component across substantially the whole of its cross sectional area.

Because the barrier is in the form of a self-supporting, relatively rigid sheet, it does not come into direct contact with the lower, wetter, food component and hence does not dissolve prior to heating. The sheet maintains itself in this position throughout storage, even if only supported at its edges, constituting an effective moisture barrier right up to the point when the food product is reheated. However, the barrier does not need to be coated directly onto the surface of either of the food components; the barrier sheet is simply positioned above the lower food component, and the upper component above the barrier (the upper component may even be supported by the barrier sheet, as is explained below).

The edible barrier may be applied not a separate sheet positioned between the two components but rather to one of the two components itself in which case that or each component provides the substrate for the barrier.

Ultimately, a food product in accordance with the invention needs much less packaging than do conventional microwavable products of similar type. It is thus cheaper and simpler to produce, and environmentally friendly.

The food product may be any suitable type of product having at least the two, upper and lower, components of different water contents and water activities. For instance, the product could be a pie (the lower component being a sweet or savoury pie filling, the upper a pastry crust); or a pudding such as a crumble (comprising a lower filling of a relatively high moisture content and an upper crumble topping of a relatively low moisture content). Generally, the upper component is likely to comprise a baked cereal product.

As well as the upper and lower components referred to above, the product may comprise additional components, such as a pastry pie lining surrounding a pie filling (which lining could be protected against moisture ingress from the pie filling using a conventional technique). However, it should be emphasised that the present invention may be in th form of a food product comprising simply a high moisture content filling or sauce in a container, with a crust or topping above it.

Where the barrier is supported on a separate sheet, the sheet is preferably in the form of a carbohydrate support of the necessary rigidity, carrying a water-repellent layer which is preferably a lipid. It is preferably sufficiently rigid as to be able to support the upper food component directly on top of it, when it is itself supported at its edges above the lower food component. The barrier preferably dissolves and/or melts into the lower component on heating to a temperature to which the food product is likely to be heated in use. In this way, the consumer will not perceive the existence of the barrier by the time he or she comes to eat the food product. In the case where the barrier is applied directly to one or both of the food components, it will also preferably dissolve and/or melt on heating to the appropriate temperature in the microwave oven.

A barrier support sheet may be made, for instance, from a cellulose ether such as hydroxypropyl methyl cellulose; gelatin; casein or gluten. However it is preferred that the support is a carbohydrate such as rice paper. The advantages of using rice paper as a support include the fact that it is readily available in an easy to use sheet form; it is relatively cheap; it has sufficient rigidity to be able to support itself in position above the lower food component, remaining out of contact with that component, when supported at its edges only; and it is easy to handle - a sheet of rice paper can simply be drawn off a roll, across the top of the lower food component, and cut to the required size. Other carbohydrates which may be used include dough or pastry, a layer of which may be included as a separate element to provide the support for the barrier.

Where a separate support sheet is not used, the barrier may be applied to the dough or pastry which forms at least the outer part of one of the food components or it may be applied directly to, for instance sausage meat or other component or element of the food product.

Whichever substrate is being used, it should be coated with a layer of a water repellent, preferably lipid, material, for instance, by conventional techniques of spraying, brushing or dipping using the lipid material in its liquid form. In order to reduce the possibility of holes in the resultant coating, the carbohydrate support can be coated with several successive layers of the water repellent material.

Where the water repellent layer comprises a lipid, the lipid is preferably in solid form at normal room temperatures. Examples of possible lipids include edible waxes such as beeswax, carnauba wax and rice bran wax, but other fats and/or solid fatty acids may also be used. A preferred lipid is that known as "Cetodan 70-00" (trade mark), a commercially available acetoglyceride which has a "dropping point" of around 40°C (ie, close to body temperature), and thus melts in the mouth of the consumer, leaving no trace of the originally present moisture barrier. As mentioned above, the lipid layer is preferably brushed or sprayed onto the substrate, using conventional techniques.

Where the substrate is a carbohydrate support, the water repellent layer is preferably present on at least the lower surface of the support, i.e. that directed towards the lower food component in the finished food product. More preferably, the carbohydrate support is coated on both sides of the layer or a water repellent material; it is then particularly effective as a barrier to water migration.

In the food product, the barrier sheet is preferably supported at its edges, more preferably around its entire perimeter, above the lower food component. Conveniently, the sheet is thus supported by support means specially provided in a container in which the food product is presented, for storage and preferably also for heating.

Typically, the food product in accordance with the present invention will be provided within a container. Where the edible barrier is provided on a self-supporting sheet, the container may include support means, positioned above the lower food component, on which support means the edges of the barrier sheet may be supported so as to hold the sheet in position above the lower component and out of direct contact therewith.

By supporting the moisture barrier in a custom-made container between the two food components, the upper, drier, component can be isolated from the lower, preventing moisture migration during storage and heating of the product. The special container, incorporating support means for the barrier, means that the product can be completely self contained; in other words, it can be taken from the shop shelf and placed directly in a microwave oven for reheating, the moisture barrier already correctly positioned between the two food components. The product looks exactly like a conventional food product of the same type, both on the shelf and when it leaves the microwave oven after heating, and there is no need for the user to remove the barrier sheet or any other packaging before heating the food product.

The container may be made of any appropriate material, for instance crystalline polyethylene terephthalate, suitable for use inside a microwave oven and having low water vapour transmissivity - many such materials are known. The food product may also be provided in combination with other suitable packaging such as, for instance, a lid; a sealed plastics packaging film; a cardboard sleeve and/or other labelling; etc.

The support means of the container preferably comprises an edge or rim or lip of an appropriate size and preferably extends around the entire perimeter of the container. In one embodiment of the invention, the support means comprises a rim around the top edge of the container; in another embodiment the support means comprises a ledge appropriately positioned between the base and the top edge of the container. In all other respects, the size and shape of the container are chosen to be appropriate to the particular food product held in it.

The barrier sheet is conveniently adhered to the support means using an appropriate, preferably edible, adhesive. Examples of such adhesives include edible gums, starches, acetoglycerides and gelatin. The use of an adhesive completes the seal between the two food components, the lower component effectively being encapsulated between the container walls and the sealed barrier sheet.

The present invention also provides a method for making a food product of the invention, the method comprising providing between the first and second components an edible barrier to the passage of water from the first component to the second component, the barrier being in the form of a substrate supported film which, at least between the components, is substantially continuous.

Preferably, the method includes reducing the water content of the second component to less than 2%. More preferably, the second component is subjected to heating at baking temperatures (for instance, 150°-200°C for a pastry product, preferably around 190°C) followed by a drying stage at a temperature less than a baking temperature but sufficient to result in continued water reduction, having regard to the water content in the air (or other gas) surrounding the component. Such drying is continued for a time sufficient for the water content to drop below 2%. Typically, the drying stage is conducted in the baking oven but with the heat source switched off.

In the case where the barrier is provided on a self-supporting sheet, the method of the invention preferably additionally comprises one or more of the following steps:
positioning the lower food component in a suitable container having support means for the barrier sheet; positioning the barrier sheet above the lower component such that its edges are supported by the support means of the container; and positioning the upper component above, or supported upon, the barrier sheet. The method preferably additionally comprises the step of adhering the edges of the barrier sheet to the support means, by means of a suitable, preferably edible, adhesive such as gelatin. The edges of the sheet are preferably pressed down against the support means during production, so as to effect a good seal between the barrier and the container.

According to the method of the invention, where the barrier comprises a carbohydrate support such as rice paper, it is preferably coated with one or more layers of a water repellent material such as a lipid, prior to positioning the barrier in the food product, by means of brushing or spraying the support with the water repellent material. In the case of a lipid coating, the lipid must be in liquid form for the brushing or spraying process.

The method of the present invention may include the addition step of wrapping the food product in appropriate outer packaging such as a plastics film surrounding a container in which the food components are held.

The present invention also provides an edible barrier to the passage of water between two food components for use as part of a food product in accordance with the invention. The barrier may be in the form of a self-supporting sheet of a certain rigidity, as described above.

The barrier may comprise a carbohydrate support of the necessary rigidity, coated with one or more layers of a water repellent material which in turn is preferably a lipid. Conveniently, the carbohydrate support is rice paper. This can be provided relatively easily with a coating or coatings of a water repellent material, so as to provide a self supporting barrier sheet which is immediately ready for use in the food product of the invention, and easy to handle. In producing such a sheet, there is no need for complex production steps such as are necessary to produce previously described barrier films.

The carbohydrate support is preferably coated on both sides with one or more layers of water repellent material. The water repellent material is preferably a lipid which is in solid form at room temperature, more preferably commercially available "Cetodan" (trade mark) or an equivalent product.

The barrier is preferably in sheet form, wound onto a roll for easy storage and handling. Again, rice paper lends itself particularly well to use in this way.

The present invention will now be described by way of example only, with reference to the accompanying illustrative drawings, of which:
Figure 1 shows a schematic cross-section through a first embodiment of a food product in accordance with the present invention;
Figure 2 shows a schematic cross-section through a second embodiment of a food product in accordance with the present invention;
Figure 3 is a graph showing the results of tests on a food product in accordance with the present invention;
Figure 4 is a schematic cross-section through a third embodiment of a food product in accordance with the present invention; and
Figure 5 is a perspective view, partly in cross-section, through a fourth embodiment of a food product in accordance with the present invention.

### Detailed Description of the Drawings

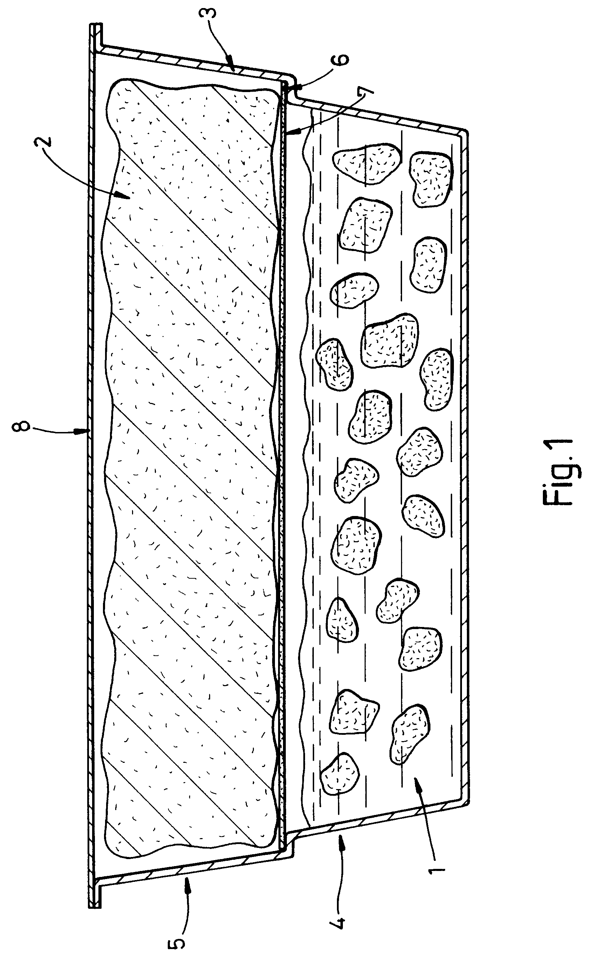

The food product shown schematically in Figure 1 is made up of two components: a lower component 1 having a relatively high water activity (a_{w}) and a relatively high water content; and an upper component 2 having a relatively low water activity and water content. In this case, the upper component 2 is a baked foodstuff, such as a pastry pie crust, and the lower component 1 might be, for example, a pie filling such as pieces of meat in a sauce or gravy, or fruit pieces in a sauce.

The food product is contained within a crystalline polyethylene terephthalate (CPET) container 3, which itself comprises a lower body portion 4 and an upper body portion generally labelled 5. The lower body portion 4 contains the lower food component 1, and the upper body portion 5 the relatively dry food component 2.

The container 3 includes a ledge 6 around its inside perimeter, separating the upper and the lower body portions. This ledge serves as the support means for an edible moisture barrier 7 separating the upper and the lower food components 1 and 2.

The barrier 7 is made from a sheet of rice paper (ie, an edible carbohydrate support), onto both the upper and lower surfaces of which have been coated layers of the edible lipid "Cetodan 70-00" (trade mark). "Cetodan 70-00" is an acetic acid ester of monoglycerides made from fully hydrogenated edible lard or tallow. Its chemical and physical data are as follows:

| | |
|---|---|
| Degree of acetylation | 0.7 |
| Iodine Value | max 2 |
| Acid Value | max 2 |
| Saponification Value | approx 320 |
| Monoglyceride content | approx 5% |
| Dropping point | 40°C |
| Form | block |

As can be seen in Figure 1, the barrier is supported above the level of the lower food component 1 and not in direct contact with it. The rice paper has sufficient rigidity that, when supported at its edges on the ledge 6, it retains this position out of contact with the lower food component.

The barrier 7 has been made by spraying or brushing liquid Cetodan onto the surfaces of a sheet of rice paper, preferably to produce several successive lipid layers as extra protection against the passage of moisture.

At its edges, the barrier 7 is "glued" onto the ledge 6 using gelatin, which acts as an edible adhesive. The barrier is pressed down onto the ledge and the gelatin, so as to provide a good seal around the edges of the container. As a result, the upper food component 2 is effectively encapsulated between the barrier sheet 7, the walls of the upper body portion 5 of the container, and the container lid. Moisture cannot pass from the lower to the upper food component during storage of the food product.

A polyethylene terephthalate (PET) or polyester film 8 is sealed across the top of container 3, so as to provide a lid for the food product and prevent uptake of moisture into the upper food component 2 from the environment. Both the container 3 and the lid 8 are impermeable to water vapour.

The food product shown in Figure 1 can be stored, purchased, microwave heated and eaten almost exactly as seen in the figure. On the shop shelf, it looks very much like a conventional pastry crust pie or other food product, and yet can be microwave heated without loss of the organoleptic properties of the upper food component.

The product should be stored at between 0 and 5°C prior to eating. Brief upward fluctuations from this temperature range may be tolerable, provided that the microbiological safety of the food (in particular of the lower component 1) is not impaired. The product can be kept for approximately 8 days under these conditions without loss of texture in the upper component 2.

Usually, the food product should be heated prior to consumption. In the case of the product shown, this is done by placing the product (including the container 3 but not lid 8) into a domestic microwave oven and heating it for an appropriate amount of time, according to the manufacturer's instructions. The moisture barrier 7 does not need to be removed by the user. During heating, it dissolves into the lower food component 1 (the lipid layer melting), so that by the time the user comes to eat the food product, he has no perception at all of the original presence of the barrier layer. The cooking time, and the exact nature of the moisture barrier 7, are both chosen so as to allow the food product to reach an appropriate temperature, whilst ensuring that the barrier has only completely dissolved towards the end of the cooking time. In this way, the barrier acts to prevent undue moisture migration during the cooking process itself.

Typically, the lower food component 1 will need to be heated so as to achieve a temperature of at least 72°C, in order to ensure microbiological safety. The upper component 2 simply needs to be heated to enhance the consumer's appreciation; its ultimate temperature is not critical as regards food safety.

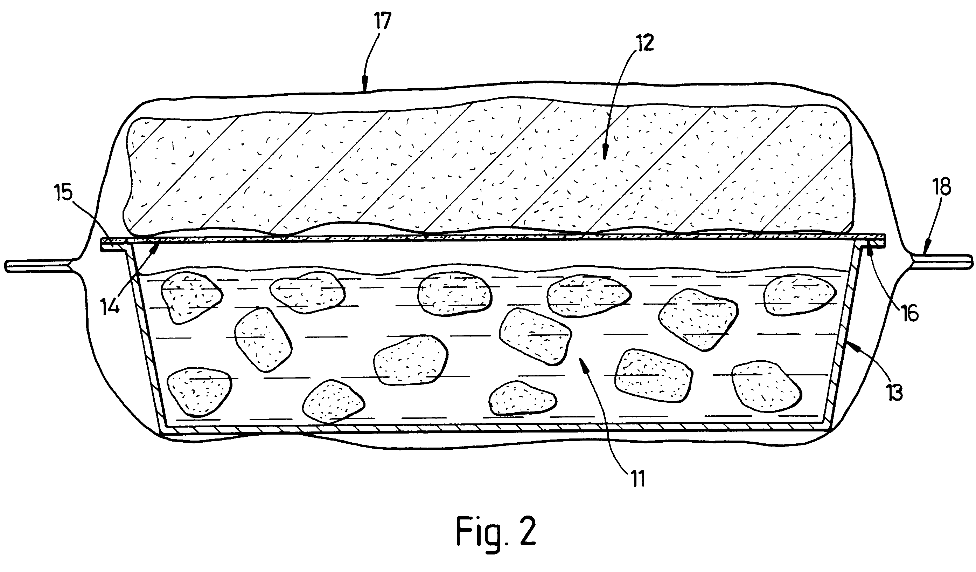

The food product shown schematically in Figure 2 again comprises a lower component 11 such as a pie filling, having a high a_{w} and water content; and an upper component 12 such as a baked pastry crust, having a relatively low a_{w} and moisture content. In this case, however, CPET container 13 has only a lower body portion, containing the lower food component 11. Edible moisture barrier 14 is supported across the top of the container on the peripheral rim 15, in such a way that it is not in direct contact with the lower food component 11. Again, the barrier is made from rice paper coated on both sides with "Cetodan 70-00" (trade mark), and sealed to the ledge 15 using an edible adhesive such as gelatin or an acetoglyceride (seal 16).

Due to the shape of container 13, the upper food component 12 is supported above the level of the container, on the top of barrier sheet 14.

The complete food product, including both the upper and lower components and the container 13, is wrapped in a conventional packaging film 17, made from a flexible , moisture-impermeable, plastics material. This protects the upper food component 12 from ingress of moisture from the environment. Film 17 is sealed at its edges (seal 18) to present a fully moisture-proof package to the external environment.

The product can be heated in a microwave oven exactly as shown, the outer wrapping 17 being removed immediately prior to eating. As does the product shown in Figure 1, this food product has excellent keeping qualities and, more importantly, can be microwave heated without loss of texture of the upper food component due to water uptake during either storage or the cooking process itself. However, the original presence of the moisture barrier 14 cannot be detected on eating, since the rice paper dissolves in, and the lipid coating melts into, the lower food component 11 on heating.

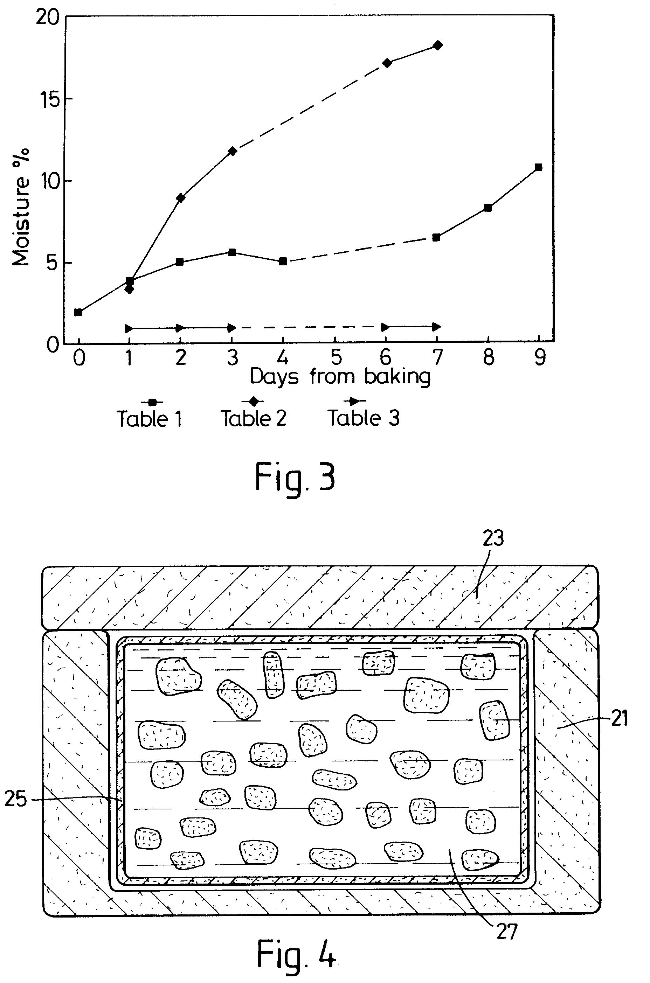

Figure 3 shows graphically the results of tests comparing a food product in accordance with the present invention (such as that shown in Figure 1 or Figure 2) with similar conventional products. The graph shows the percentage moisture content in baked puff pastry pie crusts over a period of time measured from the date of baking.

In the tests, crusts were baked to a nominal 1.0% moisture content (see Table 3), although some variation in the actual moisture content was observed. The crusts referred to in Tables 1-3 below were subsequently stored at +5°C. Duplicate samples were drawn over an eight day period for determination of moisture content of the crust and for organoleptic assessment following heating in a 650 watt microwave oven for two minutes.

The results shown in Table 1 below, and labelled as such in Figure 3, are for a pastry crust which, following baking, was positioned above an edible moisture barrier in a food product according to the present invention. The pie filling was steak and gravy, the barrier sheet a laminate of rice paper and "Cetodan 70-00" (trade mark). The product was packaged in the usual way in a co-extruded CPET/APET container with a heat-sealed Melinex (trade mark) 20 micron film lid.

**Table 1**

| Days After Baking | Crust Moisture % | Organoleptic Assessment of Crust |
|---|---|---|
| 0 | 2.0 | crisp |
| 1 | 3.9 | crisp |
| 2 | 5.0 | crisp |
| 3 | 5.6 | crisp |
| 4 | 5.0 | crisp |
| 5 | not determined | not determined |
| 6 | not determined | not determined |
| 7 | 6.4 | crisp |
| 8 | 8.2 | soft |
| 9 | 10.6 | "leathery", soft |

The results shown in Table 2 below are for a pastry crust which, after baking, was positioned above a steak and gravy pie filling in a food product according to the invention. The product had a rice paper/"Cetodan 70-00" (trade mark) barrier sheet between the crust and filing, but was in a CPET/APET container without any top lid, the crust thus being exposed to the environment. This product was stored under the same conditions as for "Table 1".

**Table 2**

| Days After Baking | Crust Moisture % | Organoleptic Assessment of Crust |
|---|---|---|
| 1 | 3.4 | crisp |
| 2 | 8.9 | soft, "leathery" |
| 3 | 11.7 | soft, "leathery" |
| 4 | not determined | not determined |
| 5 | not determined | not determined |
| 6 | 17.0 | soft, "leathery" |
| 7 | 18.0 | soft, "leathery" |

The results shown in Table 3 are for a pie crust which was wrapped (in a CEPT/APET container with a heat-sealed Melinex (trade mark) lid, as for Table 1) and stored separately from any pie filling, again at 5°C.

**Table 3**

| Days after Baking | Crust Moisture % | Organoleptic Assessment of Crust |
|---|---|---|
| 1 | 1.0 | crisp |
| 2 | 1.0 | crisp |
| 3 | 1.0 | crisp |
| 4 | not determined | crisp |
| 5 | not determined | crisp |
| 6 | 1.0 | crisp |
| 7 | 1.0 | crisp |

Figure 3 shows clearly that the pie crust in the exposed food product (Table 2) absorbed large amounts of water from the environment over a period of seven days' storage. The results in Table 2 illustrate the effect of the water absorption on the quality of the pie crust. After only three days, its moisture content had reached virtually unacceptable levels (in terms of the organoleptic properties of the pastry, which had a soft and "leathery" texture following microwave heating), and after seven days' storage, microwave heating of the food product would yield a pastry crust of extremely unpleasant texture.

In contrast, the pastry crust incorporated in the fully wrapped food product in accordance with the present invention (Table 1) absorbed water much more slowly, still having a more or less acceptable moisture content even after eight days' storage. What is more, the product could still be microwave heated without any loss in the organoleptic properties of its pastry lid. The moisture barrier sheet effectively prevented undue moisture migration from the pie filing to the pastry crust, which, when also protected from environmental moisture, remained acceptably dry for relatively long periods of storage. Only after 8 or 9 days had significant amounts of water been absorbed into the crust from the pie filling, sufficient to affect the texture of the crust on heating.

The "control" results of Table 3 simply show that, when isolated from the environment and from any higher moisture content food component, the pastry did not absorb significant amounts of moisture after up to a week's storage.

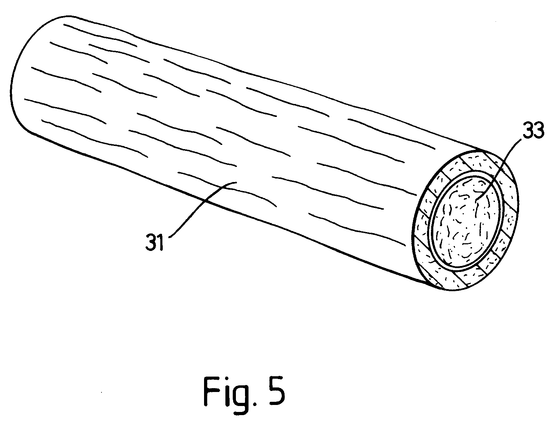

Referring to Figure 4 of the accompanying drawings, a three component product, consisting of a baked pastry case 21 and lid 23, for instance a vol-au-vent. Within the pastry case and lid there is provided a seal pouch 25 which is made of pastry. Coated on the outer surface of pouch 25 is an edible water impermeable material. The product also includes a filling 27 located within pouch 25.

Pouch 25 is formed and sealed around the filling 27 and is then cooked by poaching or steaming. The outer surface of the pouch is then coated in the edible barrier material. The filled coated pouch is then placed in pastry case 21 (and lid 23). The pastry case and lid may optionally be coated on their inner surfaces with the barrier material.

Referring to Figure 5 of the accompanying drawings a two component product in accordance with the present invention comprises a hollow cylinder of baked pastry 31 and a pre-cooked solid cylinder of a meat product 33, such as sausage meat. The surface of the cooked meat product 33 is coated with an edible water-impermeable material. The coated meat product cylinder 33 is then inserted into the baked pastry cylinder 31. Optionally, the inner surface of the baked pastry cylinder 31 may be coated with the barrier material. The assembled product is further protected from environmental moisture by enclosing it in a suitable, impermeable packaging material.

The present invention will now be further described with reference to specific examples, both of components for use with food products of the invention and the assembled products themselves.

### Example 1 - Puff Pastry

| INGREDIENTS | % |
|---|---|
| Maragrine | 8.3 |
| Salt | 1.3 |
| Wheatflour | 68.8 |
| Water | 26.6 |
| TOTAL | 100.000 |

### METHOD:

1. Sieve flour and salt into bowl.
2. Add shortening.
3. Dry mix for 1 min.
4. Add water. Mix for 4 min.
5. The pastry is extruded from the hopper to form the top and bottom layers.
6. Extrude Laminating fat between the layers
   76% base dough/24% laminating fat for Sausage Roll Pastry
   74% base dough/26% laminating fat for Topcrust Lid Pastry
9. The pastry is then layered 60 times.
10. The pastry is then cut into sections for further use.

### Example 2 -Shortcrust Pastry

| INGREDIENTS | % |
|---|---|
| Margarine | 29.20 |
| Salt | 0.70 |
| Wheatflour | 61.30 |
| Water | 8.80 |
| TOTAL | 100.00 |

### METHOD:

1. Put flour, salt, margarine into a bowl.
2. Dry crumb for 30 seconds.
3. Add water and mix for 1 min 15 secs.
4. Unload into clean bowls. Allow to stand for minimum 20 mins, maximum 3 hours.

### Example 3 - Beefsteak Fill

| INGREDIENTS | % |
|---|---|
| Beed 1"dice | 70.000 |
| Onions | 5.000 |
| Seasoning | 1.000 |
| Oil | 1.000 |
| Wheatflour | 3.000 |
| Water | 20.000 |
| TOTAL | 100.00 |

### METHOD:

1. Add oil to pan. Add onions and cook until softened.
2. Add beef and seasoning to pan, cover with water.
3. Bring to boil and simmer for approx 1 hour 20 mins or until meat is tender.
4. Mix together wheatflour and water. Add to pan stirring.
5. Bulk to total.
6. Return to boil and cook for 1 min.
7. Transfer to clean bowls and cool to <5 C.

### Example 4 - Minced Beef Fill

| INGREDIENTS | % |
|---|---|
| Vegetable Oil | 1.00 |
| Onion | 19.00 |
| Mincedbeef | 26.00 |
| Water | 25.00 |
| Tomato Puree | 0.80 |
| Seasoning | 1.40 |
| Carrots | 13.00 |
| Potato | 13.00 |
| Wheatflour | 1.80 |
| TOTAL | 100.00 |

### METHOD:

1. Heat oil in pan, add onions and cook until soft.
2. Add beef, seasonings and water.
3. Cook for 15 mins.
4. Add carrots and potatoes, simmer for a further 15 mins.
5. Mix together flour and water.
6. Add to the cooking. Bulk to total. Cook for 1 min.
7. Transfer to clean trays and cool to <5 C.

### Example 5 - Sausage Meat

| | |
|---|---|
| Lean pork | 42.00 |
| Pork backfat | 23.40 |
| Water | 16.00 |
| Seasoning | 14.00 |
| Egg | 4.60 |

### METHOD:

1. Bowl chop all the ingredients to achieve a particle size of 4-5mm.
2. Store in chill at 0-5C until required.

### Example 6 - Topcrust Pie

| MAKE UP WEIGHTS | | |
|---|---|---|
| Puff Pastry Lid 26% laminating fat. | 57g unbaked | 3mm depth |
| Meat fill | 130g | |

### METHOD:

1. Cut the Puff Pastry to the required size (approx 160mm x 120mm oval).
2. Using a multi pronged roller (hedgehog) lightly dock the underside of the pastry.
3. Lightly score the upper side of the pastry with diaganol slashes approximately 10mm apart.
4. Egg glaze prior to baking.

### BAKING PROCEDURE:

Oven No. 1.
Stage 1. Bake in a preheated oven at 190C.
Stage 2. Turn off oven and dry the pastry to below 2% moisture content.
Cool to room temperature in a controlled humidity environment. Use within 24 hours.

### ASSEMBLY:

1. Fill the Beefsteak fill into a microwavable container.
2. Heat the "Cetodan 70" to 50C.
3. Coat the underside of the baked pastry with "Cetodan 70".
4. Stick the pastry to the flange of the tray by the use of the "Cetodan 70" as it sets on cooling.
5. The product is immediately flow-wrapped in an impermeable film.
6. Store at 1-5C.

TO MICROWAVE: Heat for 1 min 30 secs on High power level.

| SHELF LIFE RESULTS OF PRODUCT USING CETODAN | | |
|---|---|---|
| DAY | ORGANOLEPTIC ASSESS | ANALYTICAL MOISTURE |
| 1 | 10 | 2.0 |
| 2 | NOT DETERMINED | NOT DETERMINED |
| 3 | NOT DETERMINED | NOT DETERMINED |
| 4 | 8 | 3.4 |
| 5 | 8 | 5.1 |
| 6 | 6 | 4.7 |
| 7 | 5 | 5.9 |

| SHELF LIFE RESULTS OF NON CETODAN PRODUCT | | |
|---|---|---|
| DAY | ORGANOLEPTIC ASSESS | ANALYTICAL MOISTURE |
| 1 | 8 | 4.2 |
| 2 | NOT DETERMINED | NOT DETERMINED |
| 3 | NOT DETERMINED | NOT DETERMINED |
| 4 | 3 | 8.6 |
| 5 | 2 | 10.2 |

### Example 7 - Top and Bottom Crust Pie

| MAKE UP WEIGHTS: | | |
|---|---|---|
| Meat Fill | 80g | |
| Puff Pastry Lid 26% laminating fat | 70g | 3mm thickness |
| Pastry Base Shortcrust | 70g | 2mm thickness |

### METHOD:

### PUFF PASTRY LID

1. Cut the pastry lid to the required size (approx 160mm x 120mm oval).
2. Using a multi pronged roller lightly dock the underside of the pastry.
3. Lightly score the upper side of the pastry with diagonal slashes approximately 10mm apart.
4. Egg glaze prior to baking.

### SHORTCRUST BASE:

1. Block the pastry into the microwavable tray.
2. Dock the base well.
3. Place another tray inside for baking.

### BAKING PROCEDURE: Lid and Base

Oven No. 1
Stage 1. Bake in a preheated oven at 190C
Stage 2. Turn off oven and dry the pastry to below 2% moisture content.
Cool to room temperature in a humidity controlled environment. Use within 24 hours.

### PREPARATION OF MOISTURE BARRIER:

1. Use a piece of Puff pastry (24% laminating Fat).
2. Roll the pastry to 1mm thickness.
3. Cut to required size. (117mm x 80mm).

### ASSEMBLY

1. Heat the "Cetodan 70" to 50C.
2. Coat the following surfaces thoroughly with "Cetodan 70":-
   a) Inside of pastry base.
   b) Both sides of the moisture barrier layer.
   c) Underside of the lid.
3. Deposit the fill into the pastry base.
4. Attach the moisture barrier layer over the meat to the top of the base using the cetodan as it sets.
5. Attach the lid to the barrier using the cetodan as it sets.
6. The product is immediately flow-wrapped in an impermeable film.
7. Store at 1-5C.

TO MICROWAVE: Heat for 1 min 30 secs on High power level.

| SHELF LIFE RESULTS OF PRODUCT WITH CETODAN | | |
|---|---|---|
| DAY | ORGANOLEPTIC ASSESS | ANALYTICAL MOISTURE % |
| 1 | 10 | 1.3 |
| 2 | NOT DETERMINED | NOT DETERMINED |
| 3 | NOT DETERMINED | NOT DETERMINED |
| 4 | 7 | 3.2 |
| 5 | 7 | 4.1 |
| 6 | 6 | 4.2 |
| 7 | 4 | 5.0 |

| SHELF LIFE RESULTS OF NON CETODAN PRODUCT | | |
|---|---|---|
| DAY | ORGANOLEPTIC ASSESS | ANALYTICAL MOISTURE % |
| 1 | 7 | 3.7 |
| 2 | NOT DETERMINED | NOT DETERMINED |
| 3 | NOT DETERMINED | NOT DETERMINED |
| 4 | 3 | 12.2 |
| 5 | 1 | 15.3 |

### Example 8 - Pastry (Vol-au-Vent)

| MAKE UP WEIGHTS: | | | |
|---|---|---|---|
| | Unbaked | Baked | Thickness |
| Puff pastry Lid (24% Laminating Fat) | 35g | 20g | mm |
| Puff pastry Rings (24% Laminating Fat) | 45g | 65g | |
| Shortcrust Base | 38g | | |
| Meat Fill | | 90g | |
| Barrier Pouch | | 10g | |

### METHOD:

1. Cut out a square of pastry approx 90 x 90mm of shortcrust pastry. This is the base.
2. Attach the rings of Puff Pastry using water.
3. Egg glaze prior to baking.
4. Cut a square of puff pastry approx 80 x 80mm for the lid.
5. Dock the underside of the pastry and slash the upperside with diagonal lines approximately 10mm apart. This is the pastry lid.
6. Egg glaze prior to baking.

### BAKING PROCEDURE:

Oven No. 1.
Stage 1. Bake in a preheated oven at 190C
Stage 2. Turn oven off and dry pastry to below 2% moisture.
Cool to room temperature in a controlled humidity environment. Use within 24 hours.

### ASSEMBLY OF PASTRY POUCH:

1. Using puff pastry rolled down to 1mm thickness, manufacture a pouch as for ravioli production by sealing all four sides. Filling used was mincedbeef fill.
2. Blanch in boiling water for 1 min.
3. Cool and dry surface moisture.

### ASSEMBLY:

1. Coat the following surfaces with "Cetodan 70":-
   a) The total surface of the pouch.
   b) The underside of the lid.
   c) The inside of the pastry case.
2. Place a pouch into the pastry case.
3. Place the lid on top.
4. The product is immediately flow-wrapped in an impermeable film.
5. Store at 1-5C.

TO MICROWAVE: Heat for 1 min 30 secs on High power level.

| SHELF RESULTS OF PRODUCT USING CETODAN | | |
|---|---|---|
| DAY | ORGANOLEPTIC ASSESS | ANALYTICAL MOISTURE % |
| 1 | 9 | 2.4 |
| 2 | 9 | 3.0 |
| 3 | NOT DETERMINED | NOT DETERMINED |
| 4 | NOT DETERMINED | NOT DETERMINED |
| 5 | 8 | 5.4 |
| 6 | 6 | 5.0 |
| 7 | 6 | 6.5 |

| SHELF LIFE RESULTS OF NON CETODAN PRODUCT | | |
|---|---|---|
| DAY | ORGANOLEPTIC ASSESS | ANALYTICAL MOISTURE % |
| 1 | 8 | 2.4 |
| 2 | 3 | 10.2 |
| 3 | NOT DETERMINED | NOT DETERMINED |
| 4 | NOT DETERMINED | NOT DETERMINED |
| 5 | 2 | 15.7 |

### Example 9 - Sausage Roll

| MAKE UP WEIGHTS | | |
|---|---|---|
| Puff Pastry (24% Laminating Fat) | 70g | 2mm |
| Sausage Meat | 75g | |

### METHOD:

1. Cut a piece of puff pastry to the required size (approx 170mm x 120mm).
2. Roll it around a metal bar and seal with water.
3. Egg glaze prior to baking.
4. Pipe sausage meat through a ½ inch nozzle on to a baking sheet and bake for 20 mins at 160C.

### BAKING PROCEDURE:

Oven No. 1
Stage 1. Bake in a preheated oven at 190°C
Stage 2. Turn off the oven and dry the pastry to below 2% moisture content
Cool to room temperature in a controlled humidity environment. Use within 24 hours.

### ASSEMBLY:

1. Coat the outside of the sausage meat with "Cetodan 70".
2. Push the sausagemeat into the pastry.
3. The product is immediately flow-wrapped in an impermeable film.
4. Store at 1-5C.

TO MICROWAVE: Heat for 1 min on High power level.

| SHELF LIFE RESULTS OF PRODUCT USING CETODAN | | |
|---|---|---|
| DAY | ORGANOLEPTIC ASSESS | ANALYTICAL MOISTURE % |
| 1 | 9 | 1.7 |
| 2 | 6 | 4.8 |
| 3 | 4 | 7.7 |
| 4 | NOT DETERMINED | NOT DETERMINED |
| 5 | NOT DETERMINED | NOT DETERMINED |
| 6 | 2 | 15.3 |
| 7 | 2 | 12.7 |

| SHELF LIFE RESULTS FOR NON CETODAN PRODUCT | | |
|---|---|---|
| DAY | ORGANOLEPTIC ASSESS | ANALYTICAL MOISTURE % |
| 1 | 8 | 3.2 |
| 2 | 3 | 8.6 |
| 3 | 2 | 12.9 |
| 4 | NOT DETERMINED | NOT DETERMINED |
| 5 | NOT DETERMINED | NOT DETERMINED |
| 6 | 1 | 19.5 |
| 7 | 1 | 23.7 |

### ADDITIONAL INFORMATION

ORGANOLEPTIC ASSESSMENT: All tasting was carried out by our standard tasting personnel and the scale of marking was as follows:
10 - 7 Good, crisp pastry.
6 - 4 Acceptable product. Pastry starting to go more leathery.
3 - 0 Unacceptable product. Tough leathery pastry.

### PACKAGING MATERIAL:

The material used is a Polypropylene polymer.

### References

1. King, C. J. 1968. Rates of Moisture Sorption and Desorption in Porous, Dried Foodstuffs, Food Technol. 22(4):165.
2. Matz, S. A. 1965. Moisture Transfer in Finished Products: In "Water in Foods" AVI Publishing C° Inc.
3. Stewart, J. A. 1975. Moisture Migration During Storage of Preserved High Moisture Grains. Trans. ASAE. 18:387.
4. Fennema, O. R. et al 1990: US patent specification No 4,915,971.

## Claims

1. A food product comprising a first food component having a relatively high water activity and a relatively high water content; a second food component having a relatively low water activity and a relatively low water content; said food product being intended to be made ready for consumption by microwave heating for a time sufficient to raise the temperature of the first food component to at least 72°C; and, located between the two components, an edible barrier to the passage of water from the first component to the second component, the barrier being in the form of a substrate supported film which, at least between the components, is substantially continuous.

2. A food product according to Claim 1 in which the moisture content of the first component has, prior to the assembly of the food product, been reduced to less than 2%.

3. A food product according to Claim 2 in which the first component is formed of pastry and the moisture content has been reduced by a drying or baking process.

4. A food product according to any of the preceding claims in which the substrate is a sheet which is positioned between the two components.

5. A food product according to Claim 4 in which the sheet is a self-supporting sheet and is positioned out of contact with at least the first component.

6. A food product according to any of Claims 1 to 3 in which the substrate is provided by at least one of the components.

7. A food product according to any of the preceding claims in the form of a pie having a meat or fruit base filling.

8. A food product according to any of Claims 1 to 6 in which the product is in the form of a fruit crumble.

9. A food product according to any of Claims 1 to 6 in which the product is in the form of a meat filled pastry roll.

10. A food product according to any of the preceding claims in which the edible barrier is provided by a lipid.
